# FASCICULE DE BREVET EUROPEEN

(11) **EP 1 704 114 B1**
(45) Date de publication et mention de la délivrance du brevet: **20.01.2016**
(21) Numéro de dépôt: 04805024.9
(22) Date de dépôt: 23.12.2004
(51) Int. Cl.: C01B 25/22, C01B 25/32

(54) **PROCEDE D'ATTAQUE DE MINERAI DE PHOSPHATE**
VERFAHREN ZUM ÄTZEN VON PHOSPHATERZEN
METHOD FOR ETCHING PHOSPHATE ORES

(30) Priorité: 24.12.2003 BE 200300683
(43) Date de publication de la demande: 27.09.2006
(73) Titulaire: Ecophos, 1348 Louvain-la-Neuve (BE)
(72) Inventeur: TAKHIM, Mohamed, B-1348 Louvain-la-Neuve (BE)
(74) Mandataire: Pecher, Nicolas
(86) Numéro de dépôt international: PCT/EP2004/053697
(87) Numéro de publication internationale: WO 2005/066070

(56) Documents cités:
- FR-A- 2 115 244
- FR-A- 2 289 443
- US-A- 3 937 783
- US-A- 3 988 420
- DATABASE WPI Section Ch, Week 199626 Derwent Publications Ltd., London, GB; Class C04, AN 1996-257951 XP002295876 & RU 2 046 757 C1 (KIROVO CHEPETS CHEM COMBINE) 27 octobre 1995 (1995-10-27)

## Description

La présente invention est relative à un procédé d'attaque de minerai de phosphate, comprenant :
- une digestion de minerai de phosphate par une solution aqueuse d'acide chlorhydrique, avec formation d'une liqueur d'attaque constituée d'une phase aqueuse, dans laquelle du phosphate de calcium est en solution, et d'une phase solide insoluble, contenant des impuretés,
- une première séparation entre la phase solide insoluble et la phase aqueuse de la liqueur d'attaque,
- une neutralisation préalable d'un milieu aqueux contenant du phosphate de calcium en solution à un premier pH inférieur au pH auquel une part significative de ce phosphate de calcium en solution précipite sous forme de monohydrogénophosphate de calcium (DCP), avec précipitation d'impuretés,
- un isolement des impuretés précipitées à partir du milieu aqueux préalablement neutralisé,
- une neutralisation ultérieure dudit milieu aqueux préalablement neutralisé à un second pH supérieur au premier pH susdit, avec précipitation de DCP, et
- une deuxième séparation entre le milieu aqueux ultérieurement neutralisé, qui est une solution aqueuse de chlorure de calcium, et du DCP précipité.

On connaît depuis longtemps des procédés prévoyant une attaque chlorhydrique de minerai de phosphate (voir par exemple les brevets US-3304157, GB-1051521, ES-2013211 et SU-A-1470663).

Ces procédés présentent l'inconvénient de faire généralement usage, pour l'attaque, d'une solution concentrée d'HCl, pouvant atteindre 20 % et même 30 % en poids. Le minerai à utiliser doit être de bonne qualité, c'est-à-dire à teneur en P₂O₅ élevée, et un broyage fin du minerai est généralement requis, ce qui augmente les coûts. On obtient au cours de l'attaque un choc thermique, dû non seulement à l'exothermie de la réaction, mais aussi à l'énergie de dissolution dégagée, et les matières insolubles sont donc difficiles à séparer, car la liqueur obtenue est visqueuse et chargée de matières organiques originaires du minerai. Etant donné la haute température et la concentration de la solution d'HCl, des problèmes de corrosion importants surgissent.

On connaît aussi un procédé d'attaque chlorhydrique dans lequel le minerai est soumis à une première attaque, limitée, par de l'acide chlorhydrique dilué (v. US-A-3.988.420). Ce procédé a pour but uniquement de dissoudre dans la roche, par cet acide dilué, une part substantielle de carbonate de calcium, mais le moins de phosphate possible, ce qui donne une phase solide enrichie en P₂O₅ pour la suite du traitement.

On connaît par ailleurs un procédé d'attaque chlorhydrique, tel qu'indiqué au début (voir FR-A-2115244). Ce procédé consiste à traiter des minerais très pauvres en phosphate, dans un processus en contre-courant, par plusieurs concentrations d'acide chlorhydrique successives. Ce processus nécessite un appareillage complexe et coûteux, pour se débarrasser d'énormes quantités de sable et d'autres insolubles qui polluent ce minerai. Il en résulte une perte de P₂O₅ dans le traitement des insolubles, qui doit être récupérée autant que possible par des étapes de lavage.

Lorsqu'un minerai de phosphate est digéré dans du HCl dilué, deux résultats déterminent la faisabilité de l'attaque :
- le rendement en P₂O₅ solubilisé dans la phase liquide. Tout P₂O₅ qui reste en résidu solide est une perte et réduit le rendement. Ce rendement s'exprime en % du P₂O₅ présent dans le minerai traité.
- le niveau de pureté du produit final, qui augmente lorsque le taux d'impuretés dissoutes dans la phase liquide de l'attaque diminue. Les impuretés, au sens de l'invention, sont tous les composants (anions, cations et métaux lourds, etc.) qui ne sont pas de l'eau, du P₂O₅, et des ions calcium et chlore. Dans la suite de la description, deux éléments seront choisis comme standards représentatifs du degré de pureté du produit final, à savoir le fluor et le fer. Le produit final sera, dans la suite, du monohydrogénophosphate de calcium (DCP) où la teneur maximale prévue sera de 0,2% pour F et de 0,05% pour Fe.

Il faut noter que plus le rendement en P₂O₅ solubilisé est grand, plus le degré de pureté est bas, car lorsque tout le P₂O₅ est dissous, généralement la plupart des impuretés le sont aussi. Il faut donc faire un compromis entre le degré de pureté souhaité pour la qualité du produit final et la valeur minimum du rendement en P₂O₅ solubilisé qui peut être admise pour que le procédé reste rentable, ce qui est principalement déterminé par le coût de la matière première.

Lorsque le minerai de départ est de qualité convenable on a déjà prévu d'appliquer un procédé comprenant une digestion du minerai de phosphate par une solution aqueuse de HCl à 10 % en poids au maximum, une séparation entre les insolubles et une phase aqueuse contenant des ions phosphate, des ions chlorure et des ions calcium, et une neutralisation de la phase aqueuse pour faire précipiter du DCP (voir demande de brevet internationale n° PCT/BE03/00111, non encore disponible au public à la date de priorité de la présente demande de brevet).

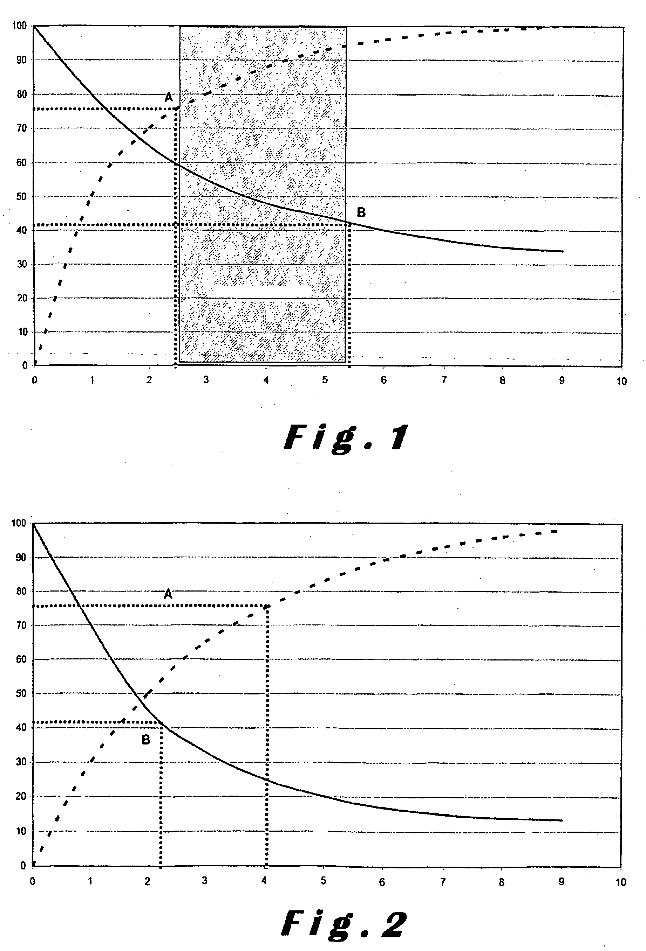

En fait, si l'on prévoit des conditions selon lesquelles le rendement minimum en P₂O₅ solubilisé par du HCl dilué doit être de 75% et que le degré minimal de pureté du produit final soit de 40%, on peut déterminer, en fonction d'une variable du procédé, les conditions dans lesquelles le procédé peut être mis en oeuvre. Un tel exemple est représenté sur le graphique de la figure 1, à propos d'un minerai de phosphate donné. Les pour-cents en ordonnées représentent soit le degré de pureté du produit final (courbe en trait plein), soit le rendement en P₂O₅ solubilisé (courbe en traits interrompus), et la graduation en abscisse est celle d'une variable quelconque du procédé. Dans la zone grisée, entre les deux points limites A et B, se situent des conditions convenables pour obtenir les valeurs minimales citées dessus, conformément à l'enseignement de la demande PCT/BE03/00111.

Sur la figure 2, un graphique semblable est réalisé, mais avec un minerai de phosphate différent. On peut voir que, pour ce minerai, il n'est pas possible d'atteindre des conditions où à la fois le rendement minimal en P₂O₅ (point A) et le degré de pureté minimal (point B) puissent être rencontrés.

La présente invention a par conséquent pour but de mettre au point un procédé d'attaque chlorhydrique dans lequel le rapport entre le rendement en P₂O₅ solubilisé et le degré de pureté du produit final soit optimalisé de façon à permettre une attaque économiquement rentable du minerai, tout en effectuant ce processus dans un appareillage courant, simple et d'un coût économiquement défendable.

On a résolu ce problème, suivant l'invention, par un procédé tel que décrit au début qui comprend une digestion, en une étape et en co-courant, de minerai de phosphate présentant une teneur en P₂O₅ supérieure à 20 % en poids par une solution aqueuse d'acide chlorhydrique présentant une concentration en HCl inférieure à 10 % en poids et dans lequel, pour atteindre ledit premier pH, ladite neutralisation préalable est effectuée avant ladite première séparation dans ladite liqueur d'attaque, comme milieu aqueux contenant du phosphate de calcium en solution, l'isolement des impuretés précipitées ayant lieu pendant ladite première séparation de ladite phase solide insoluble et ledit milieu aqueux préalablement neutralisé et soumis à ladite neutralisation ultérieure étant formé de la phase aqueuse séparée, issue de la première séparation.

Comme l'attaque chlorhydrique se passe dans un milieu dilué, et donc non visqueux, la séparation des matières insolubles est mieux réalisable et plus rapide, il n'y a pas de dégagement de chaleur pendant l'attaque qui se passe avantageusement à la température ambiante, et les problèmes de corrosion par l'acide chlorhydrique sont largement évités.

Un simple réacteur muni d'un agitateur, fonctionnant à température et à pression ambiantes, peuvent donc suffire pour le traitement du minerai de phosphate, ce qui représente un appareillage d'un coût particulièrement favorable.

La neutralisation préalable a pour effet de favoriser une précipitation préalable de métaux lourds en particulier le Fe et le Mg et d'autres impuretés telles que le fluor, pour un rendement admissible en P₂O₅ solubilisé pendant l'attaque. Le DCP ainsi obtenu est particulièrement pur, ce à quoi on ne pouvait pas s'attendre par une attaque à l'acide chlorhydrique dilué.

Par part significative des ions phosphate, il faut entendre que plus de 10 % du P₂O₅ solubilisé précipite.

La neutralisation préalable précitée peut avoir lieu par exemple dans une cuve séparée, disposée immédiatement en aval de celle de la digestion. Avantageusement le pH doit être ajusté à une valeur comprise entre 0,8 et 4, de préférence entre 1,3 et 1,5 , et cela pour éviter au maximum toute précipitation intempestive de DCP. Les métaux lourds précipités sont ainsi avantageusement séparés en une seule étape de séparation avec les composants insolubles issus de l'attaque.

L'agent neutralisant suivant l'invention pour la neutralisation préalable est de préférence une base forte choisie parmi le groupe constitué de l'hydroxyde, de l'oxyde et des sels solubles dans l'eau de calcium, de sodium, de potassium et/ou d'ammonium.

La digestion en particulier et tout le processus de l'attaque chlorhydrique peuvent être effectués à la température ambiante de préférence. Des températures de 20 à 80°C sont aussi applicables.

Enfin la concentration de la solution aqueuse de HCl servant à l'attaque est avantageusement de 3 à 8 %, préférentiellement de 5 à 7,4 %.

L'acide chlorhydrique dilué servant au procédé suivant l'invention peut provenir de n'importe quelle source. On peut par exemple se procurer de telles solutions aqueuses diluées de HCl sur le marché ou comme effluent d'un autre procédé. On peut aussi diluer dans une phase aqueuse de l'acide chlorhydrique concentré tel que couramment disponible sur le marché. On peut aussi traiter, par de l'acide sulfurique, une solution aqueuse de chlorure de calcium de façon à faire précipiter du sulfate de calcium et isoler une solution aqueuse de HCl. Une telle solution aqueuse de chlorure de calcium peut être par exemple obtenue comme effluent d'autres procédés, par exemple de certains procédés de fabrication de carbonate de sodium.

Dans le procédé suivant l'invention, le phosphate insoluble issu de la neutralisation ultérieure, est du monohydrogénophosphate de calcium (DCP) d'un degré de pureté très élevé et simultanément riche en P₂O₅. Sa teneur en P₂O₅ peut par exemple être de 40 à 50% en poids, quel que soit, au départ, le minerai à teneur en P₂O₅ supérieure à 20 % en poids. Le minerai de phosphate peut avantageusement présenter une teneur en P₂O₅ de 25 à 35 % en poids.

Au cours de la neutralisation ultérieure, le pH est avantageusement ajusté à une valeur d'au moins 4,5 , de préférence d'au moins 5. A ce pH, la totalité des ions phosphate en solution dans la phase aqueuse, sous la forme de dihydrogénophosphate de calcium (MCP), passe à l'état de DCP insoluble. Cette neutralisation est de préférence effectuée par une base forte choisie parmi le groupe constitué de l'hydroxyde, de l'oxyde et des sels solubles dans l'eau de calcium, de sodium, de potassium et/ou d'ammonium.

Suivant une forme de réalisation particulière de l'invention, le procédé comprend un traitement de ladite solution aqueuse de chlorure de calcium par une solution aqueuse d'acide sulfurique avec formation de sulfate de calcium insoluble, qui précipite, et d'une phase aqueuse à base d'acide chlorhydrique, un isolement du précipité de sulfate de calcium et un recyclage au moins partiel, vers l'étape de digestion, de la phase aqueuse à base d'acide chlorhydrique, pour former ladite solution aqueuse d'acide chlorhydrique.

Suivant une forme de réalisation perfectionnée de l'invention, le procédé comprend en outre une neutralisation supplémentaire de ladite solution aqueuse de chlorure de calcium, par une addition d'un agent neutralisant, de manière à ajuster, dans cette solution aqueuse, un pH supérieur au pH de la neutralisation ultérieure, et à précipiter des impuretés résiduelles, et une élimination de ces impuretés à partir de ladite solution aqueuse, un traitement de celle-ci par une solution aqueuse d'acide sulfurique avec formation de sulfate de calcium insoluble, qui précipite, et d'une phase aqueuse à base d'acide chlorhydrique, un isolement du précipité de sulfate de calcium et un recyclage, vers l'étape de digestion, de la phase aqueuse à base d'acide chlorhydrique, pour former ladite solution aqueuse d'acide chlorhydrique. Par cette étape de procédé on peut faire précipiter toutes les impuretés non désirées, par exemple des métaux amphotères, et réaliser un système recyclé fermé, sans augmentation progressive de la teneur de ces impuretés dans le cycle.

D'autres indications à propos du procédé d'attaque suivant l'invention sont données dans les revendications annexées.

D'autre détails et particularités de ce procédé ressortiront également de la description donnée ci-après d'exemples non limitatifs, avec références aux dessins annexés.

Les figures 1 et 2 représentent des graphiques déjà décrits ci-dessus.

La figure 3 représente, sous la forme d'un schéma d'écoulement, un exemple de réalisation de module de production de DCP, dans lequel on met en oeuvre un procédé d'attaque de minerai de phosphate suivant l'invention.

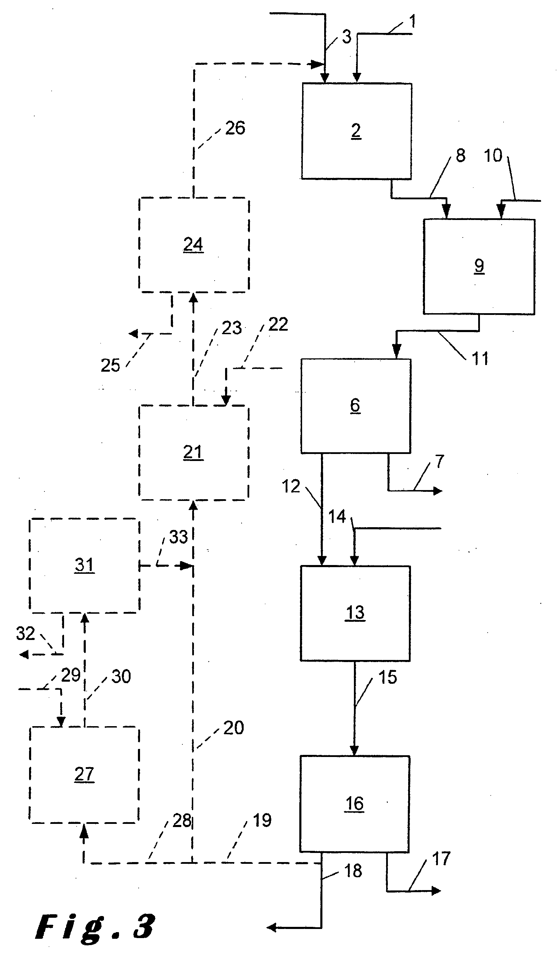

Ainsi qu'il est illustré sur la figure 3, un minerai de phosphate extrait présentant une teneur en P₂O₅ de 28 à 32 % en poids est alimenté en 1 dans une cuve de digestion 2 où il est soumis, en une seule étape, à une attaque en co-courant par une solution d'acide chlorhydrique de l'ordre de 5 % en poids, amenée dans cette cuve par un conduit 3. Par minerai de phosphate tel qu'extrait, on entend qu'il n'est soumis ni à une calcination, ni à un broyage fin, en particulier dans les mines où le minerai extrait se présente sous forme poudreuse. S'il s'agit de minerai d'origine volcanique, un simple concassage peut être prévu à une taille de grains de l'ordre de 150 à 500 µm.

Dans la cuve de digestion 2, la dissolution de phosphate de calcium est effectuée à la température ambiante et elle est rapide et intense, sous la forme de H₃PO₄ et de MCP soluble.

On peut prévoir alors d'introduire un agent neutralisant, tel que par exemple de la chaux hydratée, dans une cuve de neutralisation préalable 9 qui est agencée en aval de la cuve de digestion 2 et à laquelle elle est reliée par le conduit 8. Cette introduction d'agent neutralisant se fait par un conduit 10 et elle a pour effet de maintenir dans la cuve 9 un pH qui sera, par exemple, compris entre 1,3 et 1,5. A ce pH élevé, les métaux lourds, tels que Fe, et d'autre impuretés, telles que F, dissous à partir du minerai par l'attaque chlorhydrique, sont précipités et l'on obtient une suspension de particules solides. Le liquide trouble ainsi obtenu est envoyé par le conduit 11 à un dispositif de séparation 6, par exemple un filtre-presse, où les solides, c'est-à-dire les insolubles issus de l'attaque chlorhydrique et les substances précipitées dans la cuve 9, sont séparés ensemble en 7, après addition avantageuse d'un adjuvant de filtration approprié, connu en soi, et éliminés.

La phase liquide issue de la séparation contient sous forme dissoute de l'acide phosphorique, du phosphate monocalcique MCP, du chlorure de calcium et quelques impuretés résiduelles.

La phase aqueuse séparée contenant des ions phosphate, calcium et chlorure qui provient du dispositif de séparation 6 par le conduit 12 est alors transférée dans une cuve de neutralisation ultérieure 13, où l'on précipite le phosphate dicalcique DCP par introduction dans la phase liquide, en 14, d'un agent neutralisant, du même type que décrit précédemment, par exemple du carbonate de calcium ou du lait de chaux. Ici avantageusement le pH va atteindre une valeur de l'ordre de 5, à laquelle tout le MCP est converti en DCP insoluble dans l'eau.

Pour séparer le précipité, on peut par exemple évacuer en 15 le milieu neutralisé et le faire passer notamment sur un filtre à bande 16 où l'on sépare la matière solide, c'est-à-dire un gâteau humide de DCP 17, contenant approximativement 40-50 % en poids de P₂O₅, analysé sur produit sec, 25-28 % de Ca et des traces minimales d'impuretés. Le filtrat est évacué en 18. Il consiste en une solution aqueuse de CaCl₂, aisément éliminable, car peu polluante, et même facilement revalorisable. Le chlorure de calcium peut être utilisé par exemple comme produit antigel sur les chaussées.

Au cours de cette attaque chlorhydrique, on peut obtenir un rendement en P₂O₅ solubilisé supérieur à 75%, de préférence à 90% et très avantageusement à 95% en poids. Même à un rendement d'attaque aussi élevé, on obtient dans le DCP, obtenu en 17, des degrés de pureté supérieurs aux valeurs minimales habituellement requises, comme par exemple une teneur maximale en F de 0,2 % et en Fe de 0,05 %.

Au lieu d'évacuer la solution aqueuse de CaCl₂, issue du filtre à bande 16, on peut aussi prévoir de la diriger, par des conduits 19 et 20, vers un réacteur 21 qui est alimenté par le conduit 22 en une solution aqueuse d'acide sulfurique. Dans ce réacteur, agité à une température d'environ 60°C, pendant une heure, il se forme du sulfate de calcium insoluble, qui précipite sous une forme très pure. Par le conduit 23, la liqueur résultant de l'attaque sulfurique est soumise à une étape de séparation, par exemple par filtration en 24. La phase solide formée du sulfate de calcium est évacuée en 25 et la phase liquide formée d'une solution aqueuse de HCl très pure est renvoyée, par le conduit 26, au conduit d'alimentation en acide chlorhydrique dilué 3.

Comme l'acide sulfurique est plus fréquent et plus disponible en grandes quantités que l'acide chlorhydrique, ce recyclage permet d'améliorer encore le rendement de l'attaque chlorhydrique et même de prévoir celle-ci en des endroits où le HCl est difficile à se procurer.

D'une manière alternative, on peut, préalablement au réacteur d'attaque sulfurique, faire passer la solution aqueuse de CaCl2 issue du filtre à bande 16 dans une cuve de neutralisation supplémentaire 27, en passant par le conduit 28.

Dans cette cuve 27 on introduit à nouveau un agent neutralisant, en 29, de préférence de la chaux hydratée ou du carbonate de calcium, de façon à atteindre un pH de l'ordre de 9-10, ce qui a pour effet de faire précipiter toutes les impuretés résiduaires, telles les métaux amphotères, etc. La suspension obtenue est transférée par le conduit 30 à un séparateur 31. Le gâteau séparé est évacué en 32 et le filtrat très pur formé de CaCl₂ en solution aqueuse est conduit, par l'intermédiaire des conduits 33 et 20, au réacteur d'attaque sulfurique 21.

On peut bien entendu envisager aussi d'alimenter la source en acide chlorhydrique dilué par une solution aqueuse de CaCl₂ issue d'un autre procédé en traitant éventuellement préalablement cette solution aqueuse par une attaque sulfurique, comme dans le réacteur 21, après éventuellement une neutralisation comme dans le dispositif de neutralisation 27.

L'invention va à présent être décrite de manière plus détaillée à l'aide d'un exemple de réalisation, donné à titre non limitatif.

### Exemple

a. Du minerai de phosphate d'origine syrienne présentant une teneur en P₂O₅ de 30 % en poids est mis en oeuvre.

L'attaque du minerai est effectuée de manière discontinue à l'aide d'une solution aqueuse présentant une teneur pondérale en HCl de 7,4 %, à la température de 25°C. Dans cet exemple, la digestion est effectuée en co-courant dans un réacteur muni d'un agitateur et elle dure environ 30 minutes par lot.

La quantité de HCl ajoutée est déterminée par un rapport molaire entre le HCl ajouté au minerai et le Ca présent dans celui-ci (un rapport HCl/Ca = 1 étant défini comme une addition de HCl telle que tout le Ca du minerai est dissous sous forme de CaCl₂ dans la phase aqueuse). L'attaque du minerai est dans cet exemple réalisée à plusieurs rapports HCl/Ca variant de 0,6 à 0,9.

Après la digestion, la suspension est filtrée et le filtrat est soumis à une neutralisation par de la chaux hydratée de façon à obtenir un gâteau de DCP précipité.

Une analyse du rendement en P₂O₅ solubilisé et des teneurs en F et en Fe⁺⁺ dans le DCP est alors effectuée, ce qui donne les résultats suivants :

| Rapport HCl/Ca | Rendement en P₂O₅ solubilisé % en poids | Fraction de minerai sous forme de résidu % en poids | Fluor dans DCP % en poids | Fer dans DCP % en poids |
|---|---|---|---|---|
| 0,6 | 80 | 55 | 0,41 | 0,06 |
| 0,7 | 92 | 52 | 0,48 | 0,064 |
| 0,8 | 95 | 48 | 0,65 | 0,096 |
| 0,9 | 96 | 47 | 0,78 | 0,12 |

Comme on peut le voir, bien que le rendement en P₂O₅ solubilisé soit tout à fait acceptable, les teneurs en Fe et F dans le DCP final sont trop élevées (F > 0,2 % en poids et Fe > 0,05 % en poids).

b. On effectue une attaque du même minerai. L'attaque du minerai a lieu de manière discontinue à l'aide d'une solution aqueuse présentant une teneur pondérale en HCl de 7,4 %, à la température de 25°C. Dans cet exemple la digestion dure environ 30 minutes par lot et le rapport molaire HCl/Ca est réglé à 0,9.

Avant la première séparation liquide/solide, on effectue un contrôle du pH par de la chaux hydratée, et cela pour ajuster différentes valeurs, puis on filtre, et on neutralise à nouveau pour faire précipiter le DCP qu'on sépare sous forme d'un gâteau.

Le résultat des analyses donne les valeurs suivantes :

| pH | Rendement en P₂O₅ solubilisé % en poids | Fluor dans DCP % en poids | Fe dans DCP % en poids |
|---|---|---|---|
| 0,6 | 95 | 0,79 | 0,12 |
| 1,3 | 78 | 0,25 | 0,05 |
| 1,5 | 77 | 0,074 | 0,04 |
| 1,7 | 67 | 0,047 | 0,036 |
| 1,9 | 54 | 0,055 | 0,036 |

Comme on peut le voir, en ajustant le pH dans la gamme de 1,3 à 1,5 avant la filtration de la première séparation liquide/solide, on rend parfaitement exploitable un minerai qui, sans préneutralisation, ne l'était pas, du moins par une attaque à l'acide chlorhydrique dilué. Les rendements en P₂O₅ solubilisé sont encore acceptables et le degré de pureté du produit final obtenu est excellent. Une seule étape de séparation d'impuretés est nécessaire pour cela.

Il doit être entendu que la présente invention n'est en aucune façon limitée à cet exemple de réalisation.

## Revendications

1. Procédé d'attaque de minerai de phosphate, comprenant :
- une digestion de minerai de phosphate par une solution aqueuse d'acide chlorhydrique, avec formation d'une liqueur d'attaque constituée d'une phase aqueuse, dans laquelle du phosphate de calcium est en solution, et d'une phase solide insoluble, contenant des impuretés,
- une première séparation entre la phase solide insoluble et la phase aqueuse de la liqueur d'attaque,
- une neutralisation préalable d'un milieu aqueux contenant du phosphate de calcium en solution à un premier pH inférieur au pH auquel une part significative de ce phosphate de calcium en solution précipite sous forme de monohydrogénophosphate de calcium (DCP), avec précipitation d'impuretés,
- un isolement des impuretés précipitées à partir du milieu aqueux préalablement neutralisé,
- une neutralisation ultérieure dudit milieu aqueux préalablement neutralisé à un second pH supérieur au premier pH susdit, avec précipitation de DCP, et
- une deuxième séparation entre le milieu aqueux ultérieurement neutralisé, qui est une solution aqueuse de chlorure de calcium, et du DCP précipité,
**caractérisé en ce qu'**il comprend, une digestion, en une étape et en co-courant, de minerai de phosphate présentant une teneur en P₂O₅ supérieure à 20 % en poids par une solution aqueuse d'acide chlorhydrique présentant une concentration en HCl inférieure à 10 % en poids et **en ce que**, pour atteindre ledit premier pH, ladite neutralisation préalable est effectuée avant ladite première séparation dans ladite liqueur d'attaque comme milieu aqueux contenant du phosphate de calcium en solution, l'isolement des impuretés précipitées ayant lieu pendant ladite première séparation de ladite phase solide insoluble, et ledit milieu aqueux préalablement neutralisé est soumis à ladite neutralisation ultérieure étant formé de la phase aqueuse séparée, issue de la première séparation.

2. Procédé suivant la revendications 1 , **caractérisé en ce que** ledit premier pH de la liqueur d'attaque est ajusté par ladite neutralisation préalable à une valeur comprise entre 0,8 et 4, de préférence entre 1,3 et 1,5

3. Procédé suivant l'une des revendications 1 et 2, **caractérisé en ce que** ledit second pH de ladite phase aqueuse séparée issue de la première séparation est ajusté par ladite neutralisation ultérieure à une valeur d'au moins 4,5, de préférence d'au moins 5.

4. Procédé suivant l'une quelconque des revendications 1 à 3, **caractérisé en ce que** lesdites neutralisations préalable et ultérieure sont réalisées à l'aide d'une base forte choisie parmi le groupe constitué de l'hydroxyde, de l'oxyde et des sels solubles dans l'eau de calcium, de sodium, de potassium et/ou d'ammonium.

5. Procédé suivant l'une quelconque des revendications 1 à 4, **caractérisé en ce que** la digestion est effectuée à température ambiante.

6. Procédé suivant l'une quelconque des revendications 1 à 5, **caractérisé en ce qu'**il comprend une étape préalable de formation de ladite solution aqueuse d'acide chlorhydrique, par dilution d'acide chlorhydrique concentré dans l'eau.

7. Procédé suivant l'une quelconque des revendications 1 à 6, **caractérisé en ce qu'**il comprend une étape préalable de formation de ladite solution aqueuse d'acide chlorhydrique, par traitement par de l'acide sulfurique d'une solution aqueuse de chlorure de calcium et élimination à partir de celle-ci d'un précipité de sulfate de calcium.

8. Procédé suivant l'une quelconque des revendications 1 à 7, **caractérisé en ce que** le minerai de phosphate présente une teneur en P₂O₅ de 25 à 35 % en poids.

9. Procédé suivant l'une quelconque des revendications 1 à 8, **caractérisé en ce que** ladite solution aqueuse d'acide chlorhydrique mise en oeuvre dans la digestion présente une concentration en HCl de l'ordre de 3 à 8 %, de préférence de 5 à 7,4 % en poids.

10. Procédé suivant l'une quelconque des revendications 1 à 9, **caractérisé en ce qu'**il comprend un traitement de ladite solution aqueuse de chlorure de calcium par une solution aqueuse d'acide sulfurique avec formation de sulfate de calcium insoluble, qui précipite, et d'une phase aqueuse à base d'acide chlorhydrique, un isolement du précipité de sulfate de calcium et un recyclage au moins partiel, vers l'étape de digestion, de la phase aqueuse à base d'acide chlorhydrique, pour former ladite solution aqueuse d'acide chlorhydrique.

11. Procédé suivant l'une quelconque des revendications 1 à 9, **caractérisé en ce qu'**il comprend en outre une neutralisation supplémentaire de ladite solution aqueuse de chlorure de calcium, de manière à ajuster, dans cette solution aqueuse, un pH supérieur au pH de la neutralisation ultérieure, et à précipiter des impuretés résiduelles, et une élimination de ces impuretés à partir de ladite solution aqueuse, un traitement de celle-ci par une solution aqueuse d'acide sulfurique avec formation de sulfate de calcium insoluble, qui précipite, et d'une phase aqueuse à base d'acide chlorhydrique, un isolement du précipité de sulfate de calcium et un recyclage, vers l'étape de digestion, de la phase aqueuse à base d'acide chlorhydrique, pour former ladite solution aqueuse d'acide chlorhydrique.

12. Procédé suivant la revendication 11, **caractérisé en ce que** le pH de ladite solution aqueuse de chlorure de calcium est ajusté par ladite neutralisation supplémentaire à une valeur d'au moins 8,5, de préférence d'au moins 9.

13. Procédé suivant l'une ou l'autre des revendications 11 et 12, **caractérisé en ce que** la neutralisation supplémentaire est réalisée à l'aide d'une base forte choisie parmi le groupe constitué de l'hydroxyde, de l'oxyde et des sels solubles dans l'eau de calcium, de sodium, de potassium et/ou d'ammonium.

14. Procédé suivant l'une quelconque des revendications 1 à 13, **caractérisé en ce que** la digestion a lieu dans un réacteur muni d'un agitateur.

## Patentansprüche

1. Verfahren zum Aufschluss von Phosphaterz, umfassend:
- eine Digestion von Phosphaterz mit einer wässrigen Chlorwasserstoffsäurelösung unter Bildung einer Aufschlusslauge, bestehend aus einer wässrigen Phase, in der Calciumphosphat gelöst ist, und einer unlöslichen, festen Phase, die Verunreinigungen enthält,
- eine erste Trennung der unlöslichen, festen Phase von der wässrigen Phase der Aufschlusslauge,
- eine vorherige Neutralisation eines wässrigen Mediums, das gelöstes Calciumphosphat enthält, auf einen ersten pH-Wert, der unterhalb des pH-Werts liegt, bei dem ein wesentlicher Teil dieses gelösten Calciumphosphats in Form von Calciummonohydrogenphosphat (DCP) ausfällt, unter Ausfällung von Verunreinigungen,
- eine Isolierung der ausgefällten Verunreinigungen aus dem vorher neutralisierten wässrigen Medium,
- eine anschließende Neutralisation des vorher neutralisierten, wässrigen Mediums auf einen zweiten pH-Wert, der oberhalb des oben genannten, ersten pH-Werts liegt, unter Ausfällung von DCP, und
- eine zweite Trennung des anschließend neutralisierten wässrigen Mediums, bei dem es sich um eine wässrige Calciumchloridlösung handelt, von dem ausgefällten DCP,
**dadurch gekennzeichnet, dass** es eine Digestion, in einem Schritt und in Gleichströmung, von Phosphaterz, das einen P₂O₅-Gehalt von mehr als 20 Gew.-% aufweist, durch eine wässrige Chlorwasserstoffsäurelösung, die eine HCl-Konzentration von weniger als 10 Gew.-% aufweist, umfasst, und dadurch, dass, um den ersten pH-Wert zu erreichen, die vorherige Neutralisation vor der ersten Trennung in der Aufschlusslauge als wässrigem Medium durchgeführt wird, das gelöstes Calciumphosphat enthält, wobei die Isolierung der ausgefällten Verunreinigungen während der ersten Trennung der unlöslichen, festen Phase stattfindet, und das vorher neutralisierte wässrige Medium der anschließenden Neutralisation unterzogen wird, die aus der getrennten wässrigen Phase gebildet wird, die aus der ersten Trennung stammt.

2. Verfahren nach Anspruch 1, **dadurch gekennzeichnet, dass** der erste pH-Wert der Aufschlusslauge durch die vorherige Neutralisation auf einen Wert im Bereich zwischen 0,8 und 4, bevorzugt zwischen 1,3 und 1,5, eingestellt wird.

3. Verfahren nach einem der Ansprüche 1 und 2, **dadurch gekennzeichnet, dass** der zweite pH-Wert der getrennten wässrigen Phase, die aus der ersten Trennung stammt, durch die anschließende Neutralisation auf einen Wert von mindestens 4,5, bevorzugt mindestens 5, eingestellt wird.

4. Verfahren nach einem der Ansprüche 1 bis 3, **dadurch gekennzeichnet, dass** die vorherige und anschließende Neutralisation mithilfe einer starken Base ausgeführt werden, ausgewählt aus der Gruppe bestehend aus Calcium-, Natrium-, Kalium-und/oder Ammoniumhydroxid, -oxid und in Wasser löslichen Salzen davon.

5. Verfahren nach einem der Ansprüche 1 bis 4, **dadurch gekennzeichnet, dass** die Digestion bei Umgebungstemperatur durchgeführt wird.

6. Verfahren nach einem der Ansprüche 1 bis 5, **dadurch gekennzeichnet, dass** es einen vorherigen Schritt zur Bildung der wässrigen Chlorwasserstoffsäurelösung durch Verdünnen von konzentrierter Chlorwasserstoffsäure in Wasser umfasst.

7. Verfahren nach einem der Ansprüche 1 bis 6, **dadurch gekennzeichnet, dass** es einen vorherigen Schritt zum Bilden der wässrigen Chlorwasserstoffsäurelösung durch Behandlung einer wässrigen Calciumchloridlösung mithilfe von Schwefelsäure und Entfernen eines Calciumsulfatpräzipitats daraus umfasst.

8. Verfahren nach einem der Ansprüche 1 bis 7, **dadurch gekennzeichnet, dass** das Phosphaterz einen P₂O₅-Gehalt von 25 bis 35 Gew.-% aufweist.

9. Verfahren nach einem der Ansprüche 1 bis 8, **dadurch gekennzeichnet, dass** die wässrige Chlorwasserstoffsäurelösung, die bei der Digestion eingesetzt wird, eine HCl-Konzentration in der Größenordnung von 3 bis 8 Gew.-%, bevorzugt 5 bis 7,4 Gew.-%, aufweist.

10. Verfahren nach einem der Ansprüche 1 bis 9, **dadurch gekennzeichnet, dass** es eine Behandlung der wässrigen Calciumchloridlösung mit einer wässrigen Schwefelsäurelösung unter Bildung von unlöslichem Calciumsulfat, das ausfällt, und mit einer wässrigen Phase auf Basis von Chlorwasserstoffsäure, eine Isolierung des Calciumsulfatpräzipitats und eine mindestens teilweise Rückführung in den Schritt zur Digestion der wässrigen Phase auf Basis von Chlorwasserstoffsäure umfasst, um die wässrige Chlorwasserstoffsäurelösung zu bilden.

11. Verfahren nach einem der Ansprüche 1 bis 9, **dadurch gekennzeichnet, dass** es ferner eine zusätzliche Neutralisation der wässrigen Calciumchloridlösung, um diese wässrige Lösung auf einen pH-Wert einzustellen, der oberhalb des pH-Werts der anschließenden Neutralisation liegt, und um Restverunreinigungen auszufällen, und eine Entfernung dieser Verunreinigungen aus der wässrigen Lösung, eine Behandlung dieser mit einer wässrigen Schwefelsäurelösung unter Bildung von unlöslichem Calciumsulfat, das ausfällt, und mit einer wässrigen Phase auf Basis von Chlorwasserstoffsäure, eine Isolierung des Calciumsulfatpräzipitats und eine Rückführung in den Schritt zur Digestion der wässrigen Phase auf Basis von Chlorwasserstoffsäure umfasst, um die wässrige Chlorwasserstoffsäurelösung zu bilden.

12. Verfahren nach Anspruch 11, **dadurch gekennzeichnet, dass** der pH-Wert der wässrigen Calciumchloridlösung mit der zusätzlichen Neutralisation auf einen Wert von mindestens 8,5, bevorzugt von mindestens 9, eingestellt wird.

13. Verfahren nach irgendeinem der Ansprüche 11 und 12, **dadurch gekennzeichnet, dass** die zusätzliche Neutralisation mithilfe einer starken Base ausgeführt wird, ausgewählt aus der Gruppe bestehend aus Calcium-, Natrium-, Kalium- und/oder Ammoniumhydroxid, -oxid und in Wasser löslichen Salzen davon.

14. Verfahren nach einem der Ansprüche 1 bis 13, **dadurch gekennzeichnet, dass** die Digestion in einem Reaktor durchgeführt wird, der mit einem Rührer versehen ist.

## Claims

1. Process for etching phosphate ore, comprising:
- digestion of phosphate ore by an aqueous hydrochloric acid solution, with formation of an etching liquor composed of an aqueous phase, in which calcium phosphate is in solution, and of an insoluble solid phase, containing impurities,
- a first separation between the insoluble solid phase and the aqueous phase of the etching liquor,
- a preliminary neutralization of an aqueous medium containing calcium phosphate in solution to a first pH lower than the pH at which a significant part of this calcium phosphate in solution precipitates in the form of calcium monohydrogenphosphate (DCP), with precipitation of impurities,
- isolation of the impurities precipitated from the preliminarily neutralized aqueous medium,
- subsequent neutralization of the said preliminarily neutralized aqueous medium to a second pH greater than the first abovesaid pH, with precipitation of DCP, and
- a second separation between the subsequently neutralized aqueous medium, which is an aqueous calcium chloride solution, and precipitated DCP,
**characterized in that** it comprises digestion, in one stage and cocurrentwise, of phosphate ore exhibiting a P₂O₅ content of greater than 20% by weight by an aqueous hydrochloric acid solution exhibiting an HCl concentration of less than 10% by weight and **in that**, in order to achieve the said first pH, the said preliminary neutralization is carried out before the said first separation in the said etching liquor as aqueous medium containing calcium phosphate in solution, the isolation of the precipitated impurities taking place during the said first separation of the said insoluble solid phase, and the said preliminarily neutralized aqueous medium is subjected to the said subsequent neutralization being formed of the separated aqueous phase resulting from the first separation.

2. Process according to Claim 1, **characterized in that** the said first pH of the etching liquor is adjusted by the said preliminary neutralization to a value of between 0.8 and 4, preferably between 1.3 and 1.5.

3. Process according to either of Claims 1 and 2, **characterized in that** the said second pH of the said separated aqueous phase resulting from the first separation is adjusted by the said subsequent neutralization to a value of at least 4.5, preferably at least 5.

4. Process according to any one of Claims 1 to 3, **characterized in that** the said preliminary and subsequent neutralizations are carried out using a strong base chosen from the group consisting of the hydroxide, the oxide and the water-soluble salts of calcium, sodium, potassium and/or ammonium.

5. Process according to any one of Claims 1 to 4, **characterized in that** the digestion is carried out at ambient temperature.

6. Process according to any one of Claims 1 to 5, **characterized in that** it comprises a preliminary stage of formation of the said aqueous hydrochloric acid solution by dilution of concentrated hydrochloric acid in water.

7. Process according to any one of Claims 1 to 6, **characterized in that** it comprises a preliminary stage of formation of the said aqueous hydrochloric acid solution by treatment with sulphuric acid of an aqueous calcium chloride solution and removal from the latter of a calcium sulphate precipitate.

8. Process according to any one of Claims 1 to 7, **characterized in that** the phosphate ore exhibits a P₂O₅ content of 25 to 35% by weight.

9. Process according to any one of Claims 1 to 8, **characterized in that** the said aqueous hydrochloric acid solution employed in the digestion exhibits an HCl concentration of the order of 3 to 8%, preferably of 5 to 7.4%, by weight.

10. Process according to any one of Claims 1 to 9, **characterized in that** it comprises a treatment of the said aqueous calcium chloride solution with an aqueous sulphuric acid solution with formation of insoluble calcium sulphate, which precipitates, and of an aqueous phase based on hydrochloric acid, isolation of the calcium sulphate precipitate and at least partial recycling, to the digestion stage, of the aqueous phase based on hydrochloric acid, in order to form the said aqueous hydrochloric acid solution.

11. Process according to any one of Claims 1 to 9, **characterized in that** it furthermore comprises an additional neutralization of the said aqueous calcium chloride solution, so as to adjust, in this aqueous solution, a pH greater than the pH of the subsequent neutralization and to precipitate residual impurities, and removal of these impurities from the said aqueous solution, treatment of the latter with an aqueous sulphuric acid solution with formation of insoluble calcium sulphate, which precipitates, and of an aqueous phase based on hydrochloric acid, isolation of the calcium sulphate precipitate and recycling, to the digestion stage, of the aqueous phase based on hydrochloric acid, in order to form the said aqueous hydrochloric acid solution.

12. Process according to Claim 11, **characterized in that** the pH of the said aqueous calcium chloride solution is adjusted by the said additional neutralization to a value of at least 8.5, preferably of at least 9.

13. Process according to one or other of Claims 11 and 12, **characterized in that** the additional neutralization is carried out using a strong base chosen from the group consisting of the hydroxide, the oxide and the water-soluble salts of calcium, sodium, potassium and/or ammonium.

14. Process according to any one of Claims 1 to 13, **characterized in that** the digestion takes place in a reactor provided with a stirrer.
